# EUROPÄISCHE PATENTANMELDUNG

(11) **EP 2 400 467 A1**
(43) Veröffentlichungstag der Anmeldung: **28.12.2011**
(21) Anmeldenummer: 10006936.8
(22) Anmeldetag: 06.07.2010
(51) Int. Cl.: G07C 9/02, G07B 11/02, G06K 13/00

(54) **Schreib-/Lesegerät für Zugangskontrollsystem**

(30) Priorität: 25.06.2010 DE 202010009568 U
(71) Anmelder: CardTec Card Processing Technologies GmbH, 44795 Bochum (DE)
(72) Erfinder: Künstler, Rainer, 44795 Bochum (DE)
(74) Vertreter: Griepenstroh, Jörg

(57) **Zusammenfassung**

Schreib-/Lesegerät für Zugangskontrollsystem mit folgenden Merkmalen:
a) Zwischen einer Einführschlitz (7) und einem Ausgabeschlitz (8) erstreckt sich ein Transportweg (9) für magnetische Datenträger (4, 24);
b) In dem Transportweg (9) befindet sich eine Schreib-/Leseeinheit (11), mit einem Lesekopf (12) und einem Schreibkopf (13);
c) An dem Transportweg (9) sind mehrere Transportmittel (17, 18) vorgesehen, um einen magnetischen Datenträger (4, 24) vom Einführschlitz (7) zum Ausgabeschlitz (8) zu transportieren;
d) Erste Transportmittel (17) sind dafür vorgesehen, einen magnetischen Datenträger (4, 24) durch die Schreib-/Leseeinheit (11) zu transportieren;
e) Zweite Transportmittel (18) sind dafür vorgesehen, einen magnetischen Datenträger (4, 24) von der Schreib-/Leseeinheit (11) zu übernehmen und in Richtung des Ausgabeschlitzes (8) zu transportieren;
f) Die Transportgeschwindigkeit des ersten Transportmittels (17) ist unabhängig von der Transportgeschwindigkeit des zweiten oder eines weiteren Transportmittels (18) einstell- oder regelbar, so dass zeitgleich zwei magnetische Datenträger (4, 24) in dem Transportweg (9) aufnehmbar sind.

## Beschreibung

Die Erfindung betrifft ein Schreib-/Lesegerät für ein Zugangskontrollsystem mit den Merkmalen des Patentanspruchs 1.

Schreib-/Lesegeräte, so genannte Gate-Reader, kommen bei Zugangskontrollsystemen in Verbindung mit Vorrichtungen zur Personenvereinzelungen, insbesondere in Kombination mit Drehkreuzen, zum Einsatz. Derartige Gate-Reader finden sich beispielsweise an Bahnhöfen, Flughäfen oder auch bei Messegeländen und Veranstaltungszentren, das heißt überall dort, wo in kurzer Zeit die Zutrittsberechtigung einer großen Anzahl von Personen überprüft werden muss. Die Zutrittskontrolle erfolgt dadurch, dass sich die Zutritt suchenden Personen mittels eines magnetischen Datenträgers ausweisen. Hierbei handelt es sich insbesondere um Papier- oder Kunststofftickets, die mit einem oder mehreren Magnetstreifen versehen sind. Für den Zutritt wird ein solcher magnetischer Datenträger in einen Einführschlitz des Schreib-/Lesegeräts eingeführt. Ein Lesekopf versucht den Datenträger auszulesen. Gelingt dies, werden im nächsten Schritt einige Daten auf dem Datenträger verändert. Hierzu wird der Datenträger zu einem Schreibkopf transportiert. Schließlich werden die geschriebenen Daten mittels eines Kontrollkopfes kontrolliert. Anschließend kann der magnetische Datenträger innerhalb des Schreib-/Lesegeräts bedruckt werden. Beispielsweise können das Datum und die Uhrzeit des Zutritts auf den magnetischen Datenträger aufgenommen werden. Danach wird der so gekennzeichnete magnetische Datenträger, der auch als Ticket bezeichnet werden kann, zu einem Ausgabeschlitz transportiert, wo das Ticket entnommen werden kann.

Während der Bearbeitung des Tickets verhindert ein Verschluss am Einführschlitz das Einführen weiterer Tickets, weil dies zu Störungen im Bearbeitungsablauf führen würde.

Es kommt immer wieder vor, dass Tickets falsch herum eingeführt werden. In diesem Fall kann der Lesekopf die Daten auf dem Ticket nicht auslesen. Das Ticket muss gewendet werden. Daher schließt sich ein Ticketwender an den Lesekopf an, der das Ticket zum Wenden aufnimmt. Das Ticket wird dann wieder in den ursprünglichen Transportweg zurückgeführt und nochmals unter Umkehrung der Transportrichtung an dem Lesekopf vorbeigeführt. Anschließend kann das Ticket wie üblich weiter beschrieben, bedruckt und ausgeworfen werden.

Der Vorgang des Auslesens und Bedruckens soll vorzugsweise auf möglichst engem Raum erfolgen, damit der Ausgabeschlitz nicht allzu weit vom Einführschlitz entfernt ist, was aus ergonomischen Gründen von Vorteil ist. Ein weiterer wichtiger Aspekt ist, dass die Verarbeitung möglichst schnell erfolgt. Häufig ist das Personenaufkommen an Zugangskontrollsystemen sehr hoch, beispielsweise an Bahnhöfen. Hier müssen in sehr kurzer Zeit sehr viele Personen durch die Zugangskontrollsysteme geschleust werden. Warteschlangen sollen möglichst vermieden werden. Das gelingt nur dann, wenn die Bearbeitungsgeschwindigkeit des Zugangkontrollsystems so hoch ist, dass zwischen dem Einführen des Tickets und der Ausgabe möglichst weniger als 1 Sekunde vergeht. Der Bearbeitungsgeschwindigkeit sind jedoch Grenzen gesetzt. Nur mit technisch viel höherem Aufwand und damit signifikant höheren Kosten lässt sich die Bearbeitungsgeschwindigkeit noch steigern.

Hiervon ausgehend liegt der Erfindung die Aufgabe zugrunde, die Verarbeitungsgeschwindigkeit eines Schreib-/Lesegerätes, das insbesondere bei Zugangskontrollsystemen zum Einsatz kommt, nochmals nachhaltig zu verbessern, ohne dass die Kosten überproportional steigen.

Die Erfindung löst diese Aufgabe durch ein Schreib-/Lesegerät mit den Merkmalen des Patentanspruchs 1.

Vorteilhafte Weiterbildungen des Erfindungsgedankens sind Gegenstand der Unteransprüche.

Das erfindungsgemäße Schreib-/Lesegerät besitzt einen Einführschlitz und einen Ausgabeschlitz, zwischen welchem sich ein Transportweg für einen magnetischen Datenträger erstreckt. In dem Transportweg befindet sich eine Schreib-/Leseeinheit mit einem Lesekopf und einem Schreibkopf. Der Transport des magnetischen Datenträgers innerhalb des Schreib-/Lesegerätes erfolgt über mehrere Transportmittel, die an dem Transportweg vorgesehen sind. Bei der Erfindung ist ein erstes Transportmittel dafür vorgesehen, einen magnetischen Datenträger durch die Schreib-/Leseeinheit zu transportieren. Ferner ist ein zweites Transportmittel dafür vorgesehen, einen magnetischen Datenträger von der Schreib-/Leseeinheit zu übernehmen und in Richtung des Ausgabeschlitzes zu transportieren. Die Transportgeschwindigkeit des ersten Transportmittels ist unabhängig von der Transportgeschwindigkeit des zweiten oder eines weiteren Transportmittels einstell- oder regelbar, so dass zeitgleich zwei magnetische Datenträger in den Transportweg aufnehmbar sind. Dadurch ist eine erhebliche Leistungssteigerung möglich, was insbesondere stark frequentierten Zugangskontrollsystemen sehr zugute kommt, da innerhalb der gleichen Zeit viel mehr Personen abgefertigt werden können. Das bedeutet, dass weniger Zugangskontrollsysteme und weniger Schreib-/Lesegeräte erforderlich sind, um die gleiche Anzahl von Personen zu kontrollieren. Dadurch können Investitionskosten gesenkt werden.

Zudem kann auch erheblicher Bauraum eingespart werden, und zwar im Hinblick auf die Anzahl der Zugangskontrollsysteme, wodurch Kontrollstationen kleiner dimensioniert werden können.

Die Länge der Schreib-/Lesegeräte muss durch die Ausbildung zweier Transportmittel nicht zwangsläufig zunehmen. Vorzugsweise ist der Transportweg zwischen dem Einführschlitz und dem Ausgabeschlitz nicht länger als 500 mm, so dass das erfindungsgemäße Schreib-/Lesegerät eine äußerst kompakte Baueinheit ist. Insbesondere ist der Transportweg nicht länger als 460 mm.

Zusätzlich zu einem Lesekopf und einem Schreibkopf kann auch noch ein Kontrollkopf vorgesehen sein. Es ist sehr wichtig, die Transportvorgänge zwischen den einzelnen Köpfen zu synchronisieren. Theoretisch wäre es möglich, die Schnittstelle zwischen dem ersten Transportmittel und dem zweiten Transportmittel in den Bereich der Schreib-/Leseeinheit zu legen, das heißt zum Beispiel zwischen den Schreibkopf und den Kontrollkopf. Hat der Schreibkopf bei einer vorgegebenen Transportgeschwindigkeit einzelne Bits auf einen Magnetstreifen eines magnetischen Datenträgers geschrieben, würden Schwankungen der Transportgeschwindigkeit auch zu abweichenden Abständen zwischen den einzelnen Bits führen. Demzufolge sollte die Transportgeschwindigkeit beim Schreiben und beim Lesen absolut gleich und möglichst konstant sein. Das ist jedoch nur sehr schwer realisierbar, wenn die Übergabe von einem Transportmittel zum nächsten zwischen den Köpfen erfolgt. Es wird daher als besonders vorteilhaft angesehen, die Schnittstelle zwischen dem ersten Transportmittel und dem zweiten Transportmittel im Anschluss an die Schreib-/Leseeinheit zu platzieren, da das Auslesen und Schreiben der magnetisch gespeicherten Daten dadurch mit einheitlicher Transportgeschwindigkeit erfolgen kann.

Im Anschluss an die Schreib-/Leseeinheit befindet sich eine Druckeinheit. Das zweite Transportmittel ist dazu vorgesehen, den magnetischen Datenträger von der Schreib-/Leseeinheit zu übernehmen und durch die Druckeinheit und schließlich auch zum Ausgabeschlitz zu führen.

Wenn sich der magnetische Datenträger im Bereich der zweiten Transporteinheit befindet, kann ein Verschluss des Einführschlitzes geöffnet werden, um einen zweiten magnetischen Datenträger in den Transportweg des Schreib-/Lesegerätes aufzunehmen, noch bevor der erste magnetische Datenträger ausgegeben worden ist. Dies ist dadurch möglich, dass die Transportgeschwindigkeiten des ersten Transportmittels und des zweiten Transportmittels unabhängig voneinander einstell- und regelbar sind.

Die Erfindung ist auch dann von Vorteil, wenn eine Wendeeinheit vorgesehen ist, die dazu dient, einen falsch eingeführten magnetischen Datenträger zu wenden. Wird ein Datenträger falsch eingeführt, kann der Lesekopf die magnetischen Daten nicht lesen. Das Tickets wird dann aus dem Transportweg genommen, gewendet, wieder in den Transportweg eingebracht und unter Umkehrung der ursprünglichen Transportrichtung über den Lesekopf geführt. Dann wird die Transportrichtung wiederum umgekehrt, um das Ticket über den Lese- und den Kontrollkopf zu führen. Bei der angestrebten kompakten Bauweise mit einer Transportweglänge von nicht mehr als 500 mm ist dies nicht mit hoher Verarbeitungsgeschwindigkeit realisierbar, wenn nicht der Transportweg von zwei unabhängig voneinander agierenden Transportmitteln ausgebildet wird. Es ist also möglich, den später eingeführten magnetischen Datenträger unabhängig von dem ersten Datenträger innerhalb des Transportwegs zu bewegen und auch zu wenden, während der zuerst eingeführte magnetische Datenträger bereits am Ausgabeschlitz zur Verfügung gestellt werden kann.

In vorteilhafter Ausbildung der Erfindung ist auch denkbar, dass ein Ticket, das nicht aus dem Ausgabeschlitz entnommen wird, nach einer bestimmten Wartezeit, zum Beispiel 15 Sekunden, wieder eingezogen und in eine Parkposition überführt wird. Dadurch wird ein nachträglich eingeschobener zweiter Datenträger, der sich im Bereich des ersten Transportmittels befindet, nicht beeinträchtigt. Es befinden sich daher zu keinem Zeitpunkt zwei magnetische Datenträger im Bereich eines einzigen Transportmittels, so dass es zu keinen Handlingsschwierigkeiten kommt. Der Schaltzustand des Verschlusses im Bereich des Einführschlitzes ist daher auch nicht primär davon abhängig, ob ein Ticket am Ausgabeschlitz entnommen werden kann, sich also im Bereich des zweiten Transportmittels befindet, sondern vielmehr davon, ob das erste Transportmittel bzw. der erste Teil des Transportwegs im Bereich der Schreib-/Leseeinheit frei ist und zur Verfügung steht, ein weiteres Ticket aufzunehmen.

Ein Transportmittel im Sinne der Erfindung kann von mehreren Transportrollen oder auch Transportbändern gebildet sein, wobei alle Transportrollen oder Transportbänder eines Transportmittels zur Synchronisierung der Transportgeschwindigkeit bevorzugt von einem gemeinsamen Antriebsmotor angetrieben werden. Das erfindungsgemäße Schreib-/Lesegerät verfügt somit über mindestens zwei Antriebsmotoren, die jeweils einem Transportmittel zugeordnet sind. In Kombination mit der separat angetriebenen Wendeeinheit handelt es sich sogar um drei unabhängig voneinander anzusteuernde Motoren.

Die der Erfindung zugrunde liegende Aufgabe wird auch durch ein Verfahren zum Lesen und Schreiben von Informationen auf einen magnetischen Datenträger mittels eines Schreib-/Lesegeräts für ein Zugangskontrollsystem gemäß den Merkmalen des Patentanspruchs 8 gelöst. Wie vorstehend erläutert, ist vorgesehen, dass ein durch den Einführschlitz eingeführter magnetischer Datenträger mittels eines ersten Transportmittels an ein zweites Transportmittel übergeben wird, wobei in dieser Zeit der Einführschlitz durch einen Verschluss geschlossen wird und wobei der Verschluss geöffnet wird, während sich der magnetische Datenträger noch im Transportweg des zweiten Transportmittels befindet, so dass ein zweiter magnetischer Datenträger in den Transportweg des ersten Transportmittels einführbar ist und zeitgleich zu dem ersten Datenträger von dem ersten Transportmittel transportiert wird.

Die Erfindung wird nachfolgend anhand eines in den Zeichnungen dargestellten Ausführungsbeispiels erläutert. Es zeigt:
- Figur 1: eine perspektivische Darstellung eines Zugangskontrollsystems mit integriertem Schreib-/Lesegerät und
- Figur 2: ein Funktionsdiagramm des Schreib-/Lesegerätes, wie es bei einem Zugangskontrollsystem der Figur 1 zum Einsatz kommt.

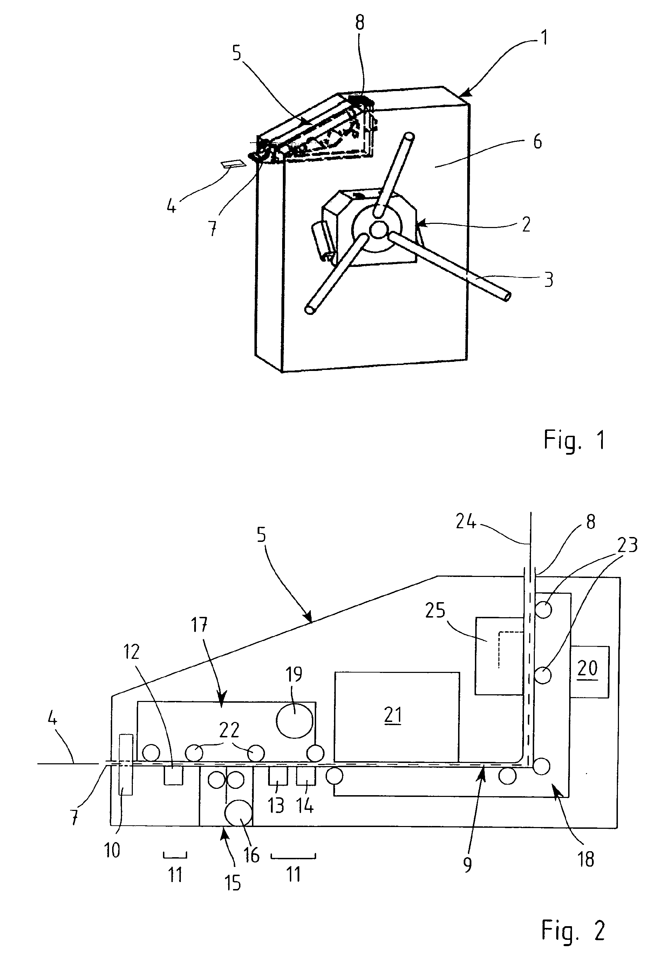

Figur 1 zeigt ein Zugangskontrollsystem 1. Dieses Zugangskontrollsystem 1 umfasst eine Vorrichtung zur Personenvereinzelung 2 in Form einer Drehkreuzanlage. Das Drehkreuz 3 wird nur dann freigegeben, wenn die betreffende Person zutrittsberechtigt ist. Die Prüfung der Zutrittsberechtigung erfolgt über die Verifizierung eines magnetischen Datenträgers 4, welchen die Person in ein Schreib-/Lesegerät 5 des Zugangskontrollsystems einführt. Dieses Schreib-/Lesegerät 5 ist in ein Gehäuse 6 des Zugangskontrollsystems 1 integriert. Die Vorderseite des Gehäuses 6 besitzt einen Einführschlitz 7, in welchen der magnetische Datenträger 4 eingeführt wird. An der Oberseite des Gehäuses 6 befindet sich ein Ausgabeschlitz 8. Dort wird der magnetische Datenträger 4 wieder ausgegeben.

Die Funktionsweise des Schreib-/Lesegerätes 5 wird nachfolgend anhand der schematischen Darstellung der Figur 2 erläutert.

Das Schreib-/Lesegerät 5 besitzt zwischen den bereits erwähnten Einführschlitz 7 und Ausgabeschlitz 8 einen Transportweg 9 für den magnetischen Datenträger 4. Bei dem Datenträger 4 handelt es sich vorzugsweise um ein Papierticket, das einen Magnetstreifen aufweist.

Hinter dem Einführschlitz 7 befindet sich ein Verschluss 10, der den Einführschlitz 7 freigibt oder sperrt. Hinter dem Verschluss 10 befindet sich ein erster Teil einer Schreib-/Leseeinheit 11. Hierbei handelt es sich um einen Lesekopf 12. Befindet sich der Magnetstreifen des Datenträgers 4 an der richtigen Position, wird der magnetische Datenträger 4 im Bereich des Lesekopfes 12 ausgelesen. Die Daten werden in einem nicht näher dargestellten Rechner überprüft. Der Datenträger 4 wird anschließend zu einem Schreibkopf 13 weitertransportiert. Der Schreibkopf 13 ändert bestimmte Daten auf dem magnetischen Datenträger 4. Anschließend erfolgt unter einem Kontrollkopf 14 die Kontrolle der geschriebenen Daten.

Zwischen dem Lesekopf 12 und dem Schreibkopf 13 befindet sich außerhalb des zuvor beschriebenen Transportwegs 9 eine Wendeeinheit 15. Die Wendeeinheit 15 ist dafür vorgesehen, falsch eingeführte magnetische Datenträger 4 aus dem Transportweg 9 zu nehmen, zu wenden und anschließend wieder in den Transportweg 9 zu bringen.

Über einen eigenständig angetriebenen Motor 16 wird der Transport des magnetischen Datenträgers 4 im Bereich der Wendeeinheit 15 bewirkt. Anschließend wird der in den eigentlichen Transportweg 9 zurückgegebene magnetische Datenträger 4 unter Umkehrung der Transportrichtung nochmals über den Lesekopf 12 geführt, ausgelesen und anschließend wie vorgesehen in Richtung des Schreibkopfes 13 und des Kontrollkopfes 14 der Schreib-/Leseeinheit 11 transportiert.

Der erste Teil des Transports erfolgt durch ein erstes Transportmittel 17. Dieses erste Transportmittel 17 übergibt den magnetischen Datenträger 4 im Anschluss an die Schreib-/Leseeinheit 11 an ein zweites Transportmittel 18, welches unabhängig von dem ersten Transportmittel 17 angetrieben wird. Es sind unabhängig voneinander anzusteuernde Motoren 19, 20 des ersten und zweiten Transportmittels 17, 18 vorgesehen. Insgesamt gibt es für den Transport des magnetischen Datenträgers 4 bei dem erfindungsgemäßen Schreib-/Lesegerät 5 drei Motoren 16, 19, 20, die unabhängig voneinander agieren.

Im Bereich des zweiten Transportmittels 18 befindet sich eine Druckeinheit 21, um Informationen auf den magnetischen Datenträger 4 zu drucken. Hierbei kann es sich um das Eintrittsdatum oder eine Eintrittsuhrzeit handeln, um so den magnetischen Datenträger 4 zu entwerten. Anschließend gelangt der magnetische Datenträger 4 zum Ausgabeschlitz 8, wo er von der zutrittsberechtigten Person entnommen werden kann.

Jedes der Transportmittel 17, 18 umfasst mehrere (andeutungsweise dargestellte) Transportrollen 22, 23, wobei die Rollen 22, 23 eines Transportmittels insgesamt über den jeweiligen Antriebsmotor 19, 20 angetrieben werden. Dadurch kann eine gleich bleibende Transportgeschwindigkeit in dem Bereich der einzelnen Transportmittel 17, 18, gewährleistet werden. Unterschiedliche Transportgeschwindigkeiten bedeuten im Zusammenhang mit dieser Erfindung, dass die Transportgeschwindigkeit auch Null betragen kann, so dass beispielsweise im Bereich des ersten Transportmittels 17 bereits ein weiterer magnetischer Datenträger 4 verarbeitet werden kann, während sich im Bereich des zweiten Transportmittels 18 noch ein anderer magnetischer Datenträger 24 befindet. Durch die zeitgleiche Bearbeitung zweier magnetischer Datenträger 4, 24 kann die Verarbeitungsgeschwindigkeit insgesamt signifikant erhöht werden, so dass pro Stunde erheblich mehr Tickes kontrolliert werden können.

Wird ein Datenträger 24 am Ausgabeschlitz 8 nicht innerhalb eines vorgegebenen Zeitraums entnommen, wird der Datenträger 24 eingezogen und in eine Parkposition gebracht. Eine Aufnahmeeinheit 25 dient zur Aufnahme solcher Datenträger 24, so dass anschließend der Transportweg 9 wieder frei ist.

### Bezugszeichen:

- 1 -: Zugangskontrollsystem
- 2 -: Vorrichtung zur Personenvereinzelung
- 3 -: Drehkreuz
- 4 -: magnetischer Datenträger
- 5 -: Schreib-/Lesegerät
- 6 -: Gehäuse
- 7 -: Einführschlitz
- 8 -: Ausgabeschlitz
- 9 -: Transportweg
- 10 -: Verschluss
- 11 -: Schreib-/Leseeinheit
- 12 -: Lesekopf
- 13 -: Schreibkopf
- 14 -: Kontrollkopf
- 15 -: Wendeeinheit
- 16 -: Motor
- 17 -: erstes Transportmittel
- 18 -: zweites Transportmittel
- 19 -: Motor
- 20 -: Motor
- 21 -: Druckeinheit
- 22 -: Transportrolle
- 23 -: Transportrolle
- 24 -: Datenträger
- 25 -: Aufnahmeeinheit

## Patentansprüche

1. Schreib-/Lesegerät für Zugangskontrollsystem mit folgenden Merkmalen:
a) Zwischen einer Einführschlitz (7) und einem Ausgabeschlitz (8) erstreckt sich ein Transportweg (9) für magnetische Datenträger (4, 24);
b) In dem Transportweg (9) befindet sich eine Schreib-/Leseeinheit (11), mit einem Lesekopf (12) und einem Schreibkopf (13);
c) An dem Transportweg (9) sind mehrere Transportmittel (17, 18) vorgesehen, um einen magnetischen Datenträger (4, 24) vom Einführschlitz (7) zum Ausgabeschlitz (8) zu transportieren;
d) Erste Transportmittel (17) sind dafür vorgesehen, einen magnetischen Datenträger (4, 24) durch die Schreib-/Leseeinheit (11) zu transportieren;
e) Zweite Transportmittel (18) sind dafür vorgesehen, einen magnetischen Datenträger (4, 24) von der Schreib-/Leseeinheit (11) zu übernehmen und in Richtung des Ausgabeschlitzes (8) zu transportieren;
f) Die Transportgeschwindigkeit des ersten Transportmittels (17) ist unabhängig von der Transportgeschwindigkeit des zweiten oder eines weiteren Transportmittels (18) einstell- oder regelbar, so dass zeitgleich zwei magnetische Datenträger (4, 24) in dem Transportweg (9) aufnehmbar sind.

2. Schreib-/Lesegerät nach Anspruch 1, **dadurch gekennzeichnet, dass** der Transportweg (9) nicht länger als 500 mm ist.

3. Schreib-/Lesegerät nach Anspruch 1 oder 2, **dadurch gekennzeichnet, dass** der Schreib-/Leseeinheit (11) eine Druckeinheit (21) nachgeordnet ist, wobei das zweite Transportmittel (18) dafür vorgesehen ist, den magnetischen Datenträger (4, 24) von der Schreib-/Leseeinheit zu übernehmen und durch die Druckeinheit (21) zu führen.

4. Schreib-/Lesegerät nach einem der Ansprüche 1 bis 3, **dadurch gekennzeichnet, dass** eine Wendeeinheit (15) vorgesehen ist, welche dazu dient, falsch eingeführte magnetische Datenträger (4, 24) aus dem Transportweg (9) zu nehmen, zu wenden und anschließend wieder in den Transportweg (9) zu bringen.

5. Schreib-/Lesegerät nach einem der Ansprüche 1 bis 4, **dadurch gekennzeichnet, dass** ein Verschluss (10) am Einführschlitz (7) angeordnet und dafür vorgesehen ist, geöffnet zu werden, nachdem ein erster magnetischer Datenträger (4) vom ersten Transportmittel (17) an ein weiteres Transportmittel (18) übergeben worden ist.

6. Schreib-/Lesegerät nach einem der Ansprüche 1 bis 5, **dadurch gekennzeichnet, dass** ein Transportmittel (17) mehrere Transportrollen (22, 23) umfasst, wobei alle Transportrollen (22, 23) eines Transportmittels (17) zur Synchronisierung der Transportgeschwindigkeit von einem gemeinsamen Antriebsmotor (19, 20) angetrieben werden.

7. Schreib-/Lesegerät nach einem der Ansprüche 1 bis 6, als Bestandteil einer Vorrichtung zur Personenvereinzelung (2), insbesondere einer Drehkreuzanlage.

8. Verfahren zum Lesen- und Schreiben von Informationen auf einen magnetischen Datenträger (4, 24) mittels eines Schreib-/Lesegeräts (5) eines Zugangskontrollsystems (1) gemäß den Merkmalen eines der Ansprüche 1 bis 7, **dadurch gekennzeichnet, dass** ein durch den Einführschlitz (7) eingeführter magnetischer Datenträger (4, 24) mittels des ersten Transportmittels (17) an ein zweites Transportmittel (18) übergeben wird, wobei in dieser Zeit der Einführschlitz (7 ) durch einen Verschluss (10) geschlossen wird und wobei der Verschluss (10) geöffnet wird, während sich der magnetische Datenträger (24) noch im Transportweg (9) befindet, so dass ein zweiter magnetischer Datenträger (4) in den Transportweg (9) einführbar ist und zeitgleich zu dem ersten Datenträger (24) von den Transportmitteln (17, 18) transportiert wird.
